# DEMANDE DE BREVET EUROPEEN

(11) **EP 2 048 733 A2**
(43) Date de publication de la demande: **15.04.2009**
(21) Numéro de dépôt: 08166397.3
(22) Date de dépôt: 10.10.2008
(51) Int. Cl.: H01M 10/00

(54) **Procédé de fabrication d'un terminal de paiement portable, terminal, dispositif et batterie correspondants**

(30) Priorité: 12.10.2007 FR 0758296
(71) Demandeur: Compagnie Industrielle et Financiere d'Ingenierie Ingenico, 92200 Neuilly sur Seine (FR)
(72) Inventeur: Naccache, David, 75018, PARIS (FR)
(74) Mandataire: Bioret, Ludovic

(57) **Abrégé**

L'invention concerne un procédé de fabrication d'un terminal de paiement comprenant les étapes suivantes :
- obtention d'une batterie dédiée, de forme complexe prédéterminée adaptée à coopérer avec la forme d'au moins un autre composant voisin dudit terminal ;
- assemblage des composants dudit terminal, comprenant l'installation de ladite batterie de façon imbriquée avec le ou lesdits composants voisins.

## Description

Le domaine de l'invention est celui des terminaux de paiement par carte bancaire, et plus précisément des terminaux de paiement portables, ou mobiles. De tels terminaux comprennent notamment un lecteur de cartes à puce, un clavier et un écran. Ils sont mobiles, donc alimentés par piles ou batteries, et connectés ou connectables à une unité de transfert vers des organismes bancaires, par exemple par l'intermédiaire d'un socle support.

On emploie dans la suite de la description le terme « batterie » pour désigner une batterie ou un ensemble de batteries nécessaire au fonctionnement d'un terminal de paiement.

L'invention concerne plus précisément l'optimisation de la taille et de la fabrication de tels terminaux.

### 2. Art antérieur

Les terminaux existants mettent en oeuvre des batteries extractibles et standardisées, ce qui introduit des contraintes sur la taille et en particulier la forme de ces batteries, généralement parallélépipédiques ou cylindriques.

Par ailleurs, ces batteries sont remplaçables, et donc amovibles. Les terminaux actuels présentent un compartiment à ouverture permettant l'accès à la ou les batteries pour en permettre le remplacement, et donc équipé d'une trappe amovible et de moyens permettant l'insertion, le retrait et la connexion des batteries. La conception de ces terminaux doit donc prendre en compte un espace important et aisément accessible pour ces batteries.

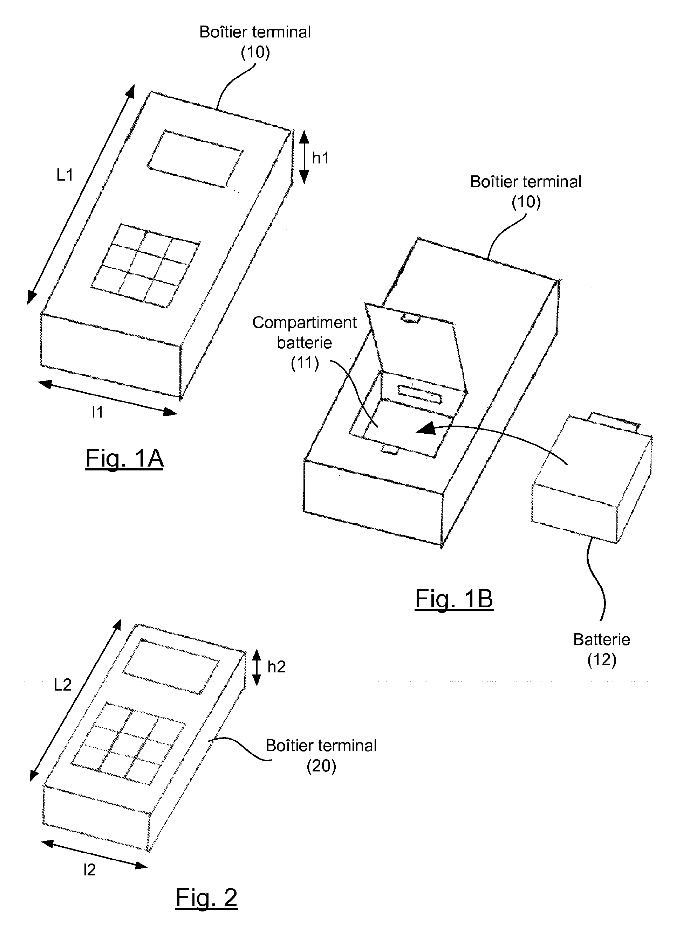

Les figures 1a et 1b illustrent un exemple de boîtier d'un tel terminal de paiement selon l'art antérieur.

La figure la présente une vue extérieure du dessus d'un boîtier 10 d'un terminal de paiement, dont les dimensions sont L1 pour la longueur (par exemple aux environs de 200 mm), h1 pour l'épaisseur (par exemple aux environs de 60 mm) et 11 pour la largeur (par exemple aux environs de 95 mm).

La figure 1b présente une vue extérieure du dessous du même boîtier 10, avec un compartiment 11 pour la batterie 12 extractible.

On constate que la batterie a une forme correspondant à l'emplacement dans le compartiment prévu dans le boîtier.

Les inconvénients des techniques de l'art antérieur résident dans le fait que les formes actuelles de batteries et la nécessité de les rendre accessibles imposent des contraintes fortes sur la taille et la fabrication (implantation des composants, organisation et assemblage de ceux-ci,...) des terminaux. On peut noter que ces inconvénients n'ont jamais été identifiés en tant que tels, puisqu'ils correspondent à des contraintes considérées comme impératives par l'homme du métier. Ainsi, la formulation de ces inconvénients, c'est-à-dire l'identification jamais formulée dans ce domaine d'un problème à résoudre, constitue en soi une partie de l'invention.

### 3. Objectifs de l'invention

L'invention a notamment pour objectif de pallier ces inconvénients de l'art antérieur.

Plus précisément, un objectif de l'invention, selon au moins un mode de réalisation, est d'optimiser la taille et l'organisation (interne et/ou externe) des terminaux de paiement.

L'invention a ainsi notamment pour objectif de fournir une technique permettant de réaliser des terminaux de paiement de formes variées et de taille réduite.

Un autre objectif de l'invention est de fournir une technique permettant d'augmenter l'organisation et la densité dans un terminal de paiement, notamment en optimisant l'espace interne occupé.

Encore un objectif de l'invention est de fournir une telle technique qui soit simple à mettre en oeuvre et peu coûteuse.

### 4. Exposé de l'invention

L'invention propose une solution nouvelle qui ne présente pas l'ensemble de ces inconvénients de l'art antérieur, sous la forme d'un procédé de fabrication d'un terminal de paiement selon la revendication 1.

Selon l'invention, ledit procédé comprend les étapes suivantes :
- obtention d'une batterie dédiée, de forme complexe prédéterminée adaptée à coopérer avec la forme d'au moins un autre composant voisin dudit terminal ;
- assemblage des composants dudit terminal, comprenant l'installation de ladite batterie de façon imbriquée avec le ou lesdits composants voisins.

Ainsi, l'invention repose sur une approche nouvelle et inventive de la fabrication d'un terminal de paiement, selon laquelle on ne prévoit pas de moyens d'accès à une batterie, que l'on place de façon optimisée entre les composants. En d'autres termes, alors que selon l'art antérieur, la conception et la fabrication se font notamment autour des batteries et de leur logement, l'invention propose une approche opposée : les batteries ne sont plus une contrainte de fabrication, mais sont au contraire placées de façon optimisée en fonction de l'espace disponible laissé par les composants.

Ainsi, le procédé selon l'invention comprend tout d'abord une étape d'obtention d'une batterie d'une forme prédéterminée, notamment à partir de l'agencement des différents éléments composant le terminal. En particulier, la batterie a une forme qui s'adapte au(x) composant(s) qui l'entourent dans le terminal. La forme de ces batteries peut être complexe, en fonction des contraintes d'espace disponible.

Ensuite, le procédé selon l'invention comprend une étape d'assemblage des différents éléments, et notamment de la batterie, de façon à ce qu'elle s'imbrique avec le ou les composants qui l'entourent.

Selon une caractéristique particulière de l'invention, le procédé de fabrication comprend une étape d'insertion dudit assemblage dans un boîtier clos de façon définitive, sans capot d'accès à ladite batterie.

Ainsi, une fois tous les éléments composant le terminal assemblés, ils sont insérés dans un boîtier clos, ne nécessitant pas la présence de moyens de démontage ou d'une trappe d'accès.

En particulier, la forme de ladite batterie est définie de façon à occuper au moins partiellement au moins un espace complexe inoccupé dans ledit terminal de paiement.

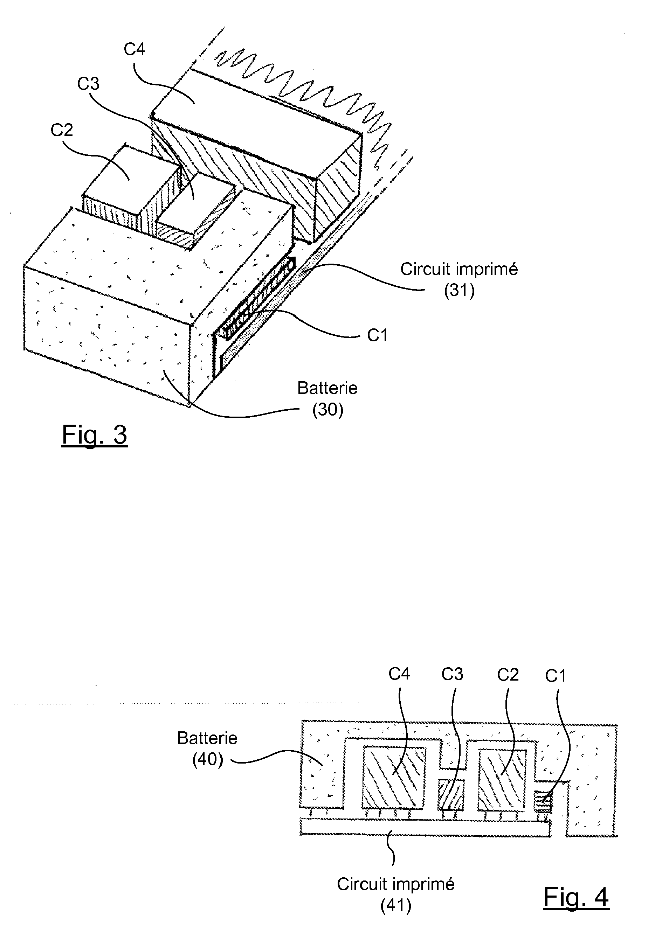

On entend par espace complexe un espace de forme non élémentaire, différente d'un parallélépipède ou d'un cylindre. Il peut par exemple s'agir de combinaisons de plusieurs parallélépipèdes de dimensions différentes. Des exemples sont présentés plus loin dans la description, en relation avec les figures 3 et 4.

Ainsi, l'espace occupé par les composants dans le terminal est optimisé, la batterie n'ayant pas à respecter de contraintes particulières liées par exemple à la nécessité de la rendre extractible. La batterie est prise en considération comme tout autre composant pour l'agencement de l'espace interne du terminal.

L'optimisation de l'espace interne du terminal peut être encore amélioré par exemple en agençant d'abord tous les composants autres que la batterie dans l'espace interne du terminal et en définissant une forme de batterie occupant un espace resté disponible, même si cet espace a une forme complexe.

Selon un mode de réalisation particulier, ladite étape d'obtention et ladite étape d'assemblage du procédé de fabrication sont simultanées et comprennent une étape de moulage de ladite batterie dans ledit espace inoccupé identifié.

Ainsi, la batterie n'est pas fabriquée avant l'assemblage des composants du terminal, mais au moment de cet assemblage, lors d'une étape de moulage de cette batterie dans l'espace disponible à l'intérieur du terminal, préalablement identifié pour accueillir la batterie.

Un autre aspect de l'invention concerne un terminal de paiement comprenant un ensemble de composants, dont une batterie et au moins un composant voisin de ladite batterie.

Selon l'invention, ladite batterie est une batterie dédiée, de forme complexe prédéterminée adaptée à coopérer avec la forme d'au moins un autre composant voisin dudit terminal, ladite batterie étant imbriquée avec le ou lesdits composants voisins.

En particulier, lesdits composants sont logés dans un boîtier clos de façon définitive, sans capot d'accès à ladite batterie.

Selon l'invention, le terminal comprend donc un boîtier fermé, sans trappe d'accès, intégrant tous ces composants y compris une batterie, ayant une forme permettant d'optimiser son espace interne, et donc sa taille.

L'invention concerne également un dispositif de fabrication d'un terminal de paiement.

Selon l'invention, un tel dispositif comprend des moyens d'assemblage des composants dudit terminal, comprenant des moyens de mise en place d'une batterie dédiée, de façon imbriquée avec au moins un composant voisin, ladite batterie dédiée présentant une forme complexe prédéterminée adaptée à coopérer avec la forme du ou desdits composants voisins.

Un tel dispositif de fabrication d'un terminal est notamment adapté à mettre en oeuvre le procédé de fabrication d'un terminal décrit précédemment.

L'invention concerne enfin une batterie pour terminal de paiement comprenant un ensemble de composants, dont une batterie et au moins un composant voisin de ladite batterie.

Selon l'invention, une telle batterie présente une forme complexe prédéterminée adaptée à coopérer avec la forme d'au moins un autre composant voisin dudit terminal, ladite batterie étant imbriquée avec le ou lesdits composants voisins.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1a et 1b présentent respectivement une vue extérieure du dessus et une vue extérieure du dessous d'un exemple de boîtier d'un terminal de paiement selon l'art antérieur ;
- la figure 2 présente un exemple de boîtier (vue extérieure) d'un terminal de paiement selon un mode de réalisation de l'invention ;
- les figures 3 et 4 présentent deux exemples d'agencement interne d'un terminal de paiement selon un mode de réalisation de l'invention ;
- la figure 5 décrit les principales étapes du procédé de fabrication d'un terminal de paiement selon un mode de réalisation de l'invention.

### 6. Description d'un mode de réalisation de l'invention

Le principe général de l'invention repose sur l'utilisation d'une batterie non extractible et par conséquent sur le fait que l'agencement des composants à l'intérieur du boîtier d'un terminal peut être réalisé sans les contraintes liées au besoin de rendre extractible la batterie.

Par conséquent, le procédé de fabrication selon l'invention se base sur l'identification d'un emplacement pour une batterie, parmi les autres composants du terminal, pour concevoir une forme de batterie adaptée à cet emplacement.

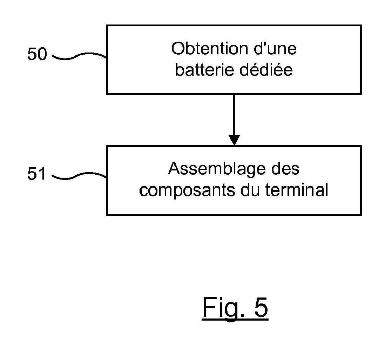

On présente ci-après, en relation avec la figure 5, les différentes étapes du procédé de fabrication selon un mode de réalisation de l'invention.

L'étape 50 d'obtention d'une batterie dédiée consiste donc à fabriquer une batterie de forme dédiée (dont la conception a pris en compte l'espace disponible parmi les différents composants d'un terminal), éventuellement complexe, c'est-à-dire correspondant à un emplacement de forme complexe.

Ainsi, lors de la conception, on commence par agencer, de façon optimale, c'est-à-dire en essayant de minimiser la taille finale du terminal, tous les composants du terminal, exceptée la batterie. On ne prend pas en compte, a priori, un logement et un accès à prévoir pour une batterie classique.

Cet agencement laisse un ou plusieurs espaces inoccupés dans le boîtier du terminal, du fait des formes et tailles différentes des composants. On définit ensuite une forme de batterie pouvant s'adapter à un ou plusieurs de ces espaces inoccupés.

On peut également définir la forme de la batterie pendant l'agencement des autres composants du terminal. Par exemple, on agence un par un les différents composants du terminal, exceptée la batterie, et à chaque intégration d'un nouveau composant, on évalue si l'intégration d'une batterie d'une forme particulière permettrait un agencement optimisé du reste des composants. Si tel est le cas, on laisse vide l'emplacement ainsi déterminé pour la batterie et on continue d'agencer les autres composants.

Une fois la batterie fabriquée, celle-ci est intégrée avec les autres composants lors d'une étape 51 d'assemblage. Ainsi, selon l'invention, la batterie est imbriquée entre différents autres éléments, permettant d'optimiser l'utilisation de l'espace.

Selon un mode de réalisation particulier de l'invention, les étapes d'obtention d'une batterie et d'assemblage des composants sont simultanées et la fabrication de la batterie correspond en fait à un moulage de la batterie dans l'emplacement prédéfini, correspondant à un espace inoccupé par les autres composants.

La figure 2 présente une vue extérieure d'un terminal de paiement 20 réalisé selon le procédé de fabrication de l'invention, dont les dimensions sont L2 pour la longueur, h2 pour l'épaisseur et 12 pour la largeur.

On suppose que les composants internes, exceptés la batterie, sont les mêmes que pour l'exemple de terminal de l'art antérieur de la figure 1, et on note que L2<L1, h2<h1 et 12<l1. On peut obtenir par exemple une longueur L2 inférieure à 190 mm (pour L1 aux environs de 200 mm), une hauteur h2 inférieure à 50 mm (pour h1 aux environs de 60 mm) et une largeur 12 inférieure à 90 mm (pour 11 aux environs de 95 mm).

Ainsi, le procédé selon l'invention permet de réduire les dimensions extérieures d'un terminal de paiement, en agençant de façon optimale les composants à l'intérieur.

On présente maintenant, en relation avec les figures 3 et 4, deux exemples d'agencement des composants d'un terminal de paiement réalisé selon le procédé de fabrication de l'invention.

Dans ces deux exemples, les composants présentés C1, C2, C3 et C4 sont des éléments constitutifs du terminal, présentant des dimensions et des emplacements variables et donnés à titre d'exemple. On suppose qu'ils sont placés dans leurs positions respectives en fonction de diverses contraintes ou exigences de fabrication. Il peut notamment s'agir de composants électroniques, montés sur un circuit imprimé 31 ou 41 mais également de tout autre élément nécessaire dans un tel terminal (lecteur de cartes à puce, clavier, écran, imprimante...).

Les formes et dimensions de ces composants définissent des espaces libres, que la batterie de l'invention va exploiter.

Sur ces deux figures, on observe que la batterie présente effectivement une forme complexe, s'adaptant aux autres composants afin d'optimiser l'espace interne du terminal.

Ainsi, sur la figure 3, la batterie est compacte, et s'imbrique au dessus du composant C1, et à côté des composants C2 et C3.

Sur la figure 4, la batterie s'adapte au-dessus des différents composants C1, C2, C3 et C4. Dans ce cas, la batterie peut également faire office de fond du boîtier. En d'autres termes, la batterie peut participer à la fonction de boîtier, et ainsi réduire encore l'encombrement et/ou simplifier le montage.

Selon d'autres aspects de réalisation, la batterie peut également servir de séparation entre deux composants, à la place d'une cloison spécifique. La batterie peut également servir de protection pour un composant fragile par exemple, là encore à la place d'une protection spécifique. Elle peut également servir de guide pour l'assemblage de composants, voire définir un réceptacle pour l'un ou l'autre de ces composants.

Ainsi, le procédé selon l'invention permet d'affecter à la batterie une ou plusieurs autres fonctions que sa fonction principale d'alimentation.

## Revendications

1. Procédé de fabrication d'un terminal de paiement, **caractérisé en ce qu'**il comprend les étapes suivantes :
- obtention d'une batterie dédiée, de forme complexe prédéterminée adaptée à coopérer avec la forme d'au moins un autre composant voisin dudit terminal ;
- assemblage des composants dudit terminal, comprenant l'installation de ladite batterie de façon imbriquée avec le ou lesdits composants voisins ;
- insertion dudit assemblage dans un boîtier clos de façon définitive, sans capot d'accès à ladite batterie.

2. Procédé de fabrication selon la revendication 1, **caractérisé en ce que** la forme de ladite batterie est définie de façon à occuper au moins partiellement au moins un espace complexe inoccupé dans ledit terminal de paiement.

3. Procédé de fabrication selon l'une quelconque des revendications 1 et 2, **caractérisé en ce que** ladite étape d'obtention et ladite étape d'assemblage sont simultanées et comprennent une étape de moulage de ladite batterie dans ledit espace inoccupé identifié.

4. Terminal de paiement comprenant un ensemble de composants, dont une batterie et au moins un composant voisin de ladite batterie, **caractérisé en ce que** ladite batterie est une batterie dédiée, de forme complexe prédéterminée adaptée à coopérer avec la forme d'au moins un autre composant voisin dudit terminal, ladite batterie étant imbriquée avec le ou lesdits composants voisins et **en ce que** lesdits composants sont logés dans un boîtier clos de façon définitive, sans capot d'accès à ladite batterie.

5. Dispositif de fabrication d'un terminal de paiement, **caractérisé en ce qu'**il comprend des moyens d'assemblage des composants dudit terminal, comprenant des moyens de mise en place d'une batterie dédiée, de façon imbriquée avec au moins un composant voisin, ladite batterie dédiée présentant une forme complexe prédéterminée adaptée à coopérer avec la forme du ou desdits composants voisins, et des moyens d'insertion dudit assemblage des composants dudit terminal dans un boîtier clos de façon définitive, sans capot d'accès à ladite batterie.

6. Batterie pour terminal de paiement comprenant un ensemble de composants, dont une batterie et au moins un composant voisin de ladite batterie, **caractérisé en ce qu'**elle présente une forme complexe prédéterminée adaptée à coopérer avec la forme d'au moins un autre composant voisin dudit terminal, ladite batterie étant imbriquée avec le ou lesdits composants voisins.
